# EUROPEAN PATENT APPLICATION

(11) **EP 2 624 023 A1**
(43) Date of publication of application: **07.08.2013**
(21) Application number: 13153416.6
(22) Date of filing: 31.01.2013
(51) Int. Cl.: G02B 5/30, B29D 11/00, G02C 7/12

(54) **Method of manufacturing polarizing lens**

(30) Priority: 31.01.2012 JP 2012017640; 26.12.2012 JP 2012282601
(71) Applicant: Hoya Corporation, Tokyo 161-8525 (JP)
(72) Inventor: Yajima, Eiichi, Tokyo, 161-8525 (JP); Hamakubo, Katsushi, Tokyo, 161-8525 (JP); Ito, Kae, Tokyo, 161-8525 (JP)
(74) Representative: Albrecht, Thomas

(57) **Abstract**

An aspect of the present invention relates to a method of manufacturing a polarizing lens, which comprises forming a polarizing layer by orienting and depositing a dichroic dye on a lens substrate; conducting an amino silane treatment by impregnating the polarizing layer with a solution of a silane coupling agent comprising an amino group; coating a waterborne resin composition comprising a polyether polyurethane resin and a water-based solvent on the polarizing layer following the amino silane treatment and then drying the waterborne resin composition to form a primer layer; and forming a cured coating by coating a curable composition on the primer layer that has been formed and then conducting a curing treatment.

## Description

### BACKGROUND OF THE INVENTION

### FIELD OF THE INVENTION

The present invention relates to a method of manufacturing a polarizing lens, and more particularly, to a method of manufacturing a highly durable polarizing lens that is suitable as an eyeglass lens.

### DISCUSSION OF THE BACKGROUND

Polarizing lenses are widely used as eyeglass lenses to reduce the glare experienced by the human eye in daily life, sports, and the like. Generally, the polarizing nature of dichroic dyes is utilized to reduce glare. These polarizing lenses are normally fabricated by forming a polarizing layer comprising a dichroic dye on a substrate on or an orientation layer positioned on a substrate. Methods for manufacturing such polarizing lenses are disclosed in, for example, published Japanese translation of PCT international publication for patent application (TOKUHYO) No. 2008-527401, Japanese Unexamined Patent Publication (KOKAI) No. 2009-237361, WO 2008/106034, and WO 2009/029198.

As is described in above publications, a functional film is normally provided on the polarizing layer to enhance durability, impart various functions, and the like in a polarizing lens. However, when adhesion between the polarizing layer and the functional film is poor, the functional film will sometimes separate from the main body of the lens during storage or use. When adhesion between the polarizing layer and the layer beneath it is poor, the polarizing layer ends up separating. Such separation reduces the durability of the lens, so it is preferable to avoid the separation in polarizing lenses used in eyeglass lens applications in which high durability is required due to long-term use by the wearer.

### SUMMARY OF THE INVENTION

An aspect of the present invention provides for a polarizing lens with good durability in which separation of the polarizing layer, functional layers, and the like is inhibited.

The present inventors conducted extensive research in this regard. As a result, they discovered that a polarizing lens of high durability could be provided by the following means. The present invention was devised on that basis. The present inventors surmise that this result was achieved primarily for the following reasons:
(i) The ether bonds of the polyether polyurethane resin contained in the primer layer were severed by the curing treatment in the step of forming a coating, producing active groups. These active groups were thought to react with the dye layer components in the lower layer, strengthening adhesion.
(ii) An amino silane treatment strengthened adhesion between the polarizing layer and the lower layer, which was also thought to contribute to enhancing durability.

An aspect of the present invention relates to a method of manufacturing a polarizing lens, which comprises:
forming a polarizing layer by orienting and depositing a dichroic dye on a lens substrate;
conducting an amino silane treatment by impregnating the polarizing layer with a solution of a silane coupling agent comprising an amino group;
coating a waterborne resin composition comprising a polyether polyurethane resin and a water-based solvent on the polarizing layer following the amino silane treatment and then drying the waterborne resin composition to form a primer layer; and
forming a cured coating by coating a curable composition on the primer layer that has been formed and then conducting a curing treatment.

In an embodiment, the above manufacturing method comprises conducting the curing treatment by irradiating light or by heating.

In an embodiment, the above manufacturing method comprises, in the amino silane treatment, drying or heat treatment following the impregnation with a solution of a silane coupling agent comprising an amino group.

In an embodiment, the above manufacturing method further comprises conducting an epoxy silane treatment by impregnating the polarizing layer with a silane coupling agent comprising an epoxy group prior to the formation of a primer layer but after the amino silane treatment.

In an embodiment, the above manufacturing method comprises, in the epoxy silane treatment, drying or heating treatment following the impregnation with a solution of a silane coupling agent comprising an epoxy group.

The present invention can provide a polarizing lens of high durability that is suitable as an eyeglass lens.

### DETAILED DESCRIPTION OF THE EMBODIMENTS

An aspect of the present invention relates to a method of manufacturing a polarizing lens, which comprises:
forming a polarizing layer by orienting and depositing a dichroic dye on a lens substrate;
conducting an amino silane treatment by impregnating the polarizing layer with a solution of a silage coupling agent comprising an amino group;
coating a waterborne resin composition comprising a polyether polyurethane resin and a water-based solvent on the polarizing layer following the amino silane treatment and then drying the waterborne resin composition to form a primer layer; and
forming a cured coating by coating a curable composition on the primer layer that has been formed and then conducting a curing treatment.
According to the above manufacturing method, separation of the coating that is formed on the polarizing layer from the polarizing layer can be inhibited and a polarizing lens of high durability can be provided. The polarizing lens thus obtained is suitable as an eyeglass lens of which high durability is required.
The method of manufacturing a polarizing lens of an aspect of the present invention will be described in further detail below.

### Lens substrate

Lens substrates made of materials that are commonly employed in the lens substrates of eyeglass lenses, such as lens substrates comprised of plastics such as polyurethane, polythiourethane, polycarbonate, and diethylene glycol bis(allyl carbonate), and inorganic glasses, can be employed in the method of manufacturing an eyeglass lens of an aspect of the present invention. Neither the thickness nor the diameter of the lens substrate is specifically limited. The thickness is normally about 1 to 30 mm and the diameter normally about 50 to 100 mm. When the polarizing lens is an eyeglass lens employed to correct vision, a lens substrate with a refractive index nd of about 1.5 to 1.8 is normally employed. A lens substrate that is colorless is normally employed, but a lens substrate with coloration of a degree that does not compromise transparency can be employed. The surface shape of the substrate on which the polarizing layer is formed is not specifically limited. The shape can be flat, convex, concave, or the like as desired.

### Orientation layer

The polarizing property of the dichroic dye comprised in the polarizing layer is primarily achieved by monoaxially orienting the dichroic dye. To monoaxially orient the dichroic dye, the method of coating a coating liquid comprising the dichroic dye on a grooved surface is generally adopted, and can be used in an aspect of the present invention. The grooves for monoaxially orienting the dichroic dye can be formed on the surface of the substrate. However, as described in the above publications, forming the grooves on the surface of an orientation layer provided on the lens substrate is advantageous in terms of achieving a good polarizing property from the dichroic dye.

The orientation layer is normally provided either directly on the lens substrate of indirectly through another layer. A hardcoat layer is an example of a layer that can be formed between the lens substrate and the orientation layer. The hardcoat layer is not specifically limited. A coating of microparticulate metal oxide added to an organic silicon compound is desirable. By way of example, for details on such hardcoat layers, reference can be made to Japanese Unexamined Patent Publication (KOKAI) No. 2007-77327, paragraphs [0071] to [0074], and Japanese Unexamined Patent Publication (KOKAI) No. 2009-237361, paragraph [0027]. Instead of an organic silicon compound, an acrylic compound can be employed to form the hardcoat layer. Known UV-curable resins such as acrylate monomers and oligomers, as well as EB-curable resins can be employed as coating compositions to form the hardcoat layer. Such hardcoat layers will be described further below. The thickness of the hardcoat layer is about 0.5 to 10 µm, for example. Lens substrates with hardcoat layers are commercially available, and the orientation layer can be formed on such a lens substrate in an aspect of the present invention.

The thickness of the orientation layer is normally about 0.02 to 5 µm, desirably 0.05 to 0.5 µm. The orientation layer can be formed by depositing a film-forming material by a known film-forming method such as vapor deposition or sputtering, or by a known coating method such as dipping or spin coating. Examples of suitable film-forming materials are metals and semimetals, as well as oxides, complexes, and compounds thereof. Preferably, a material selected from among Si, Al, Zr, Ti, Ge, Sn, In, Zn, Sb, Ta, Nb, V, Y, and Cr; an oxide thereof; or a complex or compound thereof is employed. Of these, from the perspective of ease of imparting properties as an orientation layer, a silicon oxide such as SiO or SiO₂ is desirable. Of these, SiO₂ is preferred from the perspective of reactivity with silane coupling agents, described further below.

An example of an orientation layer formed by the coating method is a sol-gel film comprising an inorganic oxide sol. An example of a coating liquid that is suited to forming the sol-gel film is a coating liquid comprising an alkoxysilane or hexaalkoxydisiloxane and an inorganic oxide sol. From the perspective of ease of imparting functions as the orientation film, the alkoxysilane is desirably that denoted by general formula (1) described in Japanese Unexamined Patent Publication (KOKAI) No. 2009-237361, and the hexaalkoxydisiloxane is desirably that denoted by general formula (2) described in Japanese Unexamined Patent Publication (KOKAI) No. 2009-237361. The coating liquid can comprise either an alkoxysilane or a hexaalkoxydisiloxane, or both. Further, the alkoxysilane comprising a functional group denoted by general formula (3) described in Japanese Unexamined Patent Publication (KOKAI) No. 2009-237361 can also be incorporated as needed. For details regarding the above coating liquid and film-forming methods (coating methods), reference can be made to Japanese Unexamined Patent Publication (KOKAI) No. 2009-237361, paragraphs [0011] to [0023] and [0029] to [0031], and Examples described therein.

Grooves are normally formed on the orientation layer that has been formed to monoaxially orient the dichroic dye in the coating liquid that is coated on the orientation layer. Coating a coating liquid containing a dichroic dye on the surface of an orientation layer in which grooves have been formed can align the dye with the grooves or in a direction perpendicular to the grooves, depending on the properties of the dichroic dye. Thus, the dichroic dye can be monoaxially oriented and its polarizing properties can be well realized. The grooves can be formed by, for example, conducting the rubbing step that is conducted in the orientation processing of liquid-crystal molecules. A rubbing step is a step in which a surface being abraded is rubbed in a specific direction with cloth or the like. For details, reference can be made to US Patent 2,400,877 or 4,865,668, for example. Grooves can also be formed on the orientation layer by the polishing treatment described in Japanese Unexamined Patent Publication (KOKAI) No. 2009-237361, paragraphs [0033] to [0034]. It suffices to set the depth and pitch of the grooves that are formed so as to monoaxially orient the dichroic dye.

### Step of forming the polarizing layer (dichroic dye layer)

The polarizing layer (dichroic dye layer) that is provided either directly or through an orienting layer or the like on the lens substrate will be described next.

"Dichroism" refers to a property whereby the color of light passing through differs based on the direction of propagation due to the anisotropy of selective light absorption of a medium. A dichroic dye has the properties of strongly absorbing light in a specific direction of the dye molecules relative to polarization light and weakly absorbing light in a direction perpendicular thereto. Some dichroic dyes are known to exhibit a liquid crystalline state within certain concentration and temperature ranges when water is employed as solvent. Such liquid crystals are referred to as lyotropic liquid crystals. This liquid crystalline state of dichroic dyes can be used to align the dye molecules in a specific direction, permitting stronger expression of dichroism. Coating a coating liquid comprising a dichroic dye on a surface in which grooves have been formed permits the monoaxial orientation of the dichroic dye, and thus the formation of a polarizing layer with a good polarizing property.

The dichroic dye employed in an aspect of the present invention is not specifically limited. Examples are the various dichroic dyes that are normally employed in polarizing members. Specific examples are: azo, anthraquinone, merocyanine, styryl, azomethine, quinone, quinophthalone, perylene, indigo, tetrazine, stilbene, and benzidine dyes. Those described in U.S. Patent No. 2,400,877 and published Japanese translation of PCT international publication for patent application (TOKUHYO) No. 2002-527786 can also be employed.

The coating liquid containing a dichroic dye can be in the form of a solution or a suspension. Many dichroic dyes are soluble in water. The coating liquid is usually an aqueous solution with water as solvent. The content of the dichroic dye in the coating liquid can be, for example, about 1 to 50 weight percent, but so long as the desired polarizing property is achieved, there is no limitation to this range.

The coating liquid can contain other components in addition to the dichroic dye. Dyes other than dichroic dyes are an example of other components. Formulating such dyes permits the manufacturing of a polarizing member of desired color. From the perspective of further enhancing coating properties and the like, a rheology-modifying agent, adhesion-promoting agent, plasticizer, leveling agent, and other additives can also be formulated.

The method of coating the coating liquid is not specifically limited. Examples are the above-mentioned known methods of dipping and spin coating. The thickness of the polarizing layer is not specifically limited, but is normally about 0.05 to 5 µm. The silane coupling agent, described further below, is normally used to impregnate the polarizing layer and essentially comprised by the polarizing layer.

When a water-soluble dye is employed as the dichroic dye, to enhance film stability, it is desirable to conduct a treatment to render the film insoluble in water after coating and drying the coating liquid. The water insolubilization treatment can be conducted by, for example, ion exchanging the terminal hydroxyl group of the dye molecule or creating a state of chelation between the dye and a metal ion. To that end, use of the method of impregnating the polarizing layer that has been formed with an aqueous solution of a metal salt is desirable. The metal salt that is employed is not specifically limited. Examples are AlCl₃, BaCl₂, CdCl₂, ZnCl₂, FeCl₂, and SnCl₃. Following the water insolubilization treatment, the surface of the polarizing layer can be dried.

### Amino silane treatment

Coating a coating liquid comprising a dichroic dye on the lens substrate, either directly or through an orientation layer or the like, and orienting and depositing the dichroic dye as set forth above permits the formation of a polarizing layer. In an aspect of the present invention, the polarizing layer that has been formed is impregnated with a silane coupling agent comprising an amino group (an amino silane). The reason why separation of the polarizing layer can be inhibited in a polarizing lens obtained by the amino silane treatment is thought to be that the amino silane that is incorporated in the polarizing layer can contribute to enhancing adhesion between the polarizing layer and the layer under it (the orientation layer or the like). In addition, the amino silane treatment can contribute to enhancing the film strength of the polarizing layer. The amino silane treatment is desirably conducted after the water insolubilization treatment.

The amino silane treatment is desirably implemented by coating the silane coupling agent comprising an amino group on the surface of the polarizing layer in the form of a liquid comprising it in a concentration of about 1 to 15 weight percent, preferably about 1 to 10 weight percent. The solvent of the solution is desirably a water-based solvent, preferably water or a mixed solvent of water and an alcohol (methanol, ethanol, or the like). The solution can be coated by a known method such as dipping, spin coating, or spraying. Following coating of the silane coupling agent comprising an amino group, in one embodiment, the lens can be left standing in the atmosphere without temperature control and left to dry naturally or with blowing. In another embodiment, it can be placed for a prescribed period in a heating furnace or the like to conduct a heat treatment. The heat treatment is desirably implemented at 50 to 120°C for from about 5 minutes to 3 hours.

The silane coupling agent normally has a structure denoted by R-Si(OR')₃ (with the multiple instances of R' being identical or different). A silane coupling agent comprising an amino group in one in which the functional group denoted by R comprises an amino group. The amino group is normally bonded to the Si through a divalent linking group. Examples of divalent linking groups are those given among the compounds in Examples further below. The functional group denoted by R' is normally an alkyl group that can produce a silanol (Si-OH) when undergoing hydrolysis in a water-based solvent. The number of carbon atoms of the alkyl group denoted by R' is, for example, 1 to 10, desirably 1 to 3. Specific examples are amino-group comprising alkoxysilanes such as N-(β-aminoethyl)-γ-aminopropyltrimethoxysilane, N-(β-aminoethyl)-γ-aminopropylmethyldimethoxysilane, γ-aminopropylmethyldimethoxysilane, γ-aminopropylmethyldiethyoxysilane, γ-aminopropyltrimethoxysilane, γ-aminopropyltriethoxysilane, N-(β-aminoethyl)-γ-aminopropylmethyldimethoxysilane, N-(β-aminoethyl)-y-aminopropylmethyldiethoxysilane, and hydrolysis products thereof. These amino group-comprising silane coupling agents can be used singly, or in combinations of two or more. After coating the amino group-comprising silane coupling agent, it is also possible to rinse the coated surface with pure water, deionized water, or the like to remove excess coupling agent that has adhered to the outer surface.

### Epoxy silane treatment

Following the above-described amino silane treatment, the lens can be employed as is in the step of forming a primer layer, described further below. To obtain a polarizing lens that is suitable as an eyeglass lens, it is desirable to impregnate the polarizing layer following the amino silane treatment with a silane coupling agent comprising an epoxy group (epoxy silane treatment). The epoxy silane treatment can be conducted because it can inhibit clouding and cracking of the polarizing layer and can yield a polarizing lens with the good optical characteristics required of an eyeglass lens. This is presumed by the present inventors to be the case because an epoxy group-comprising silane coupling agent can increase the film strength of the polarizing layer.

An epoxy group-comprising silane coupling agent is one in which the functional group denoted by R above comprises an epoxy group. Details of the structural formula relating to an epoxy group-comprising silane coupling agent are as set forth in regard to the amino group-containing silane coupling agent above with the exception that an epoxy group is contained in R. Specific examples are glycidoxy group-comprising trialkoxysilanes such as γ-glycidoxypropyltrimethoxysilane (γ-GPS), and γ-glycidoxypropylmethyldiethoxysilane; and epoxyalkylalkoxy silanes such as β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, and hydrolysis products thereof. These epoxy group-comprising silane coupling agents can be employed singly or in combinations of two or more. Details regarding the epoxy silane treatment are as set forth above with regard to the amino silane treatment. The epoxy silane treatment can also be conducted by a heat treatment following coating of the coupling agent solution in the same manner as in the amino silane treatment, or, for example, simply by natural drying or blowing without a heat treatment to inhibit clouding and cracking.

### Primer laver-forming step

In the method of manufacturing a polarizing lens of an aspect of the present invention, a waterborne resin composition comprising a polyether polyurethane resin and a water-based solvent is coated and then dried on the polarizing layer after the above treatment to form a primer layer. Here, using a waterborne resin composition containing a polyether polyurethane resin can enhance the adhesion between the coating provided on the primer layer and the polarizing layer. The curing treatment used to form the above coating can sever the bonds of the ether contained in the polyether polyurethane resin to generate active groups. These active groups can react with the components of the polarizing layer in the lower layer, which is thought to contribute to enhancing adhesion. Further, since the composition is water based, it can have good affinity with the dichroic dye contained in the polarizing layer beneath, which is advantageous relative to a non-waterborne resin. In the present invention, the term "waterborne resin composition" refers to a composition having the property of being solidified by removing the water-based solvent that it contains. From the perspective of achieving both adhesion and optical characteristics in the polarizing lens obtained, the thickness of the primer layer that is formed is desirably 0.05 µm to 2.0 µm.

The water-based solvent contained in the waterborne resin composition is a solvent that contains at least water, such as water or a mixed solvent of water and a polar solvent or the like. From the perspective of liquid stability and film-forming properties, the concentration of the solid component of the waterborne resin composition is desirably 1 to 62 weight percent, preferably 5 to 38 weight percent. In addition to a resin component, the waterborne resin composition can be such that the polarizing layer contains, as needed, additives such as oxidation inhibitors, dispersing agents, plasticizers, leveling agents, and the like. A commercially available waterborne resin composition can be diluted with a solvent such as water, alcohol, propylene glycol monomethyl ether (PGM), or the like and suitable additives can be added for use.

The waterborne resin composition can comprise a polyether polyurethane resin in a dissolved state or in the form of dispersed microparticles (desirably colloidal particles) in the water-based solvent. Of these, a dispersion in the form of a polyether polyurethane resin dispersed as microparticles in a water-based solvent is desirable. In that case, from the perspective of the dispersion stability of the composition, the particle diameter of the polyether polyurethane resin is desirably equal to or less than 0.3 µm. The pH of the waterborne resin composition is desirably about 5.5 to 9.0 at 25°C from the perspective of stability, and the viscosity at 25°C is desirably 5 to 500 mPa·s, preferably 10 to 50 mPa·s, from the perspective of coating suitability.

The waterborne resin composition contains a polyether polyurethane resin as a resin component. It can also contain other resin components. In that case, the polyether polyurethane resin desirably accounts for the greatest proportion among the resin components (for example, equal to or more than 80 weight percent). To further enhance adhesion, it is desirable to use a waterborne resin composition that contains only a polyether polyurethane resin as the resin component. The polyether polyurethane resin is a polyurethane that is obtained using as a polyol component only a polyether polyol. In polyurethanes obtained by using a polyester polyol component in addition to a polyether polyol component as polyol components (polyether polyester polyurethanes), as shown in Comparative Example 2 further below, it has not been possible to achieve enhanced adhesion by means of the primer layer. The ester bonds that are contained in the polyol component along with the ether bonds are thought to compromise adhesion. The fact that an enhanced adhesive effect that cannot be achieved with a polyurethane obtained by using a polyol of another structure along with polyether polyol can be achieved with a polyether polyurethane resin is something that was discovered for the first time by the present inventors.

Polyether polyurethane resin can be prepared by subjecting a polyether polyol and an organic polyisocyanate to a urethane reaction together with a chain-extending agent, as needed, in solvent with great affinity to water, which is inert to the reaction, to obtain a prepolymer, neutralizing the prepolymer, and then dispersing it in a water-based solvent containing a chain-extending agent to increase the molecular weight. In particular, a waterborne resin composition obtained by dispersing in a water-based solvent a prepolymer with a terminal isocyanate having an anionic group such as a carboxyl group or sulfonate group and having a basic structure in the form of a polyether polyol is desirable. Methods of preparing such waterborne resin compositions are known. A commercially available water-based urethane can be employed as is, or diluted with a water-based solvent as needed for use as the waterborne resin composition in an aspect of the present invention.

A waterborne resin layer can be formed as a primer layer on the polarizing layer by coating and drying the above-described waterborne resin composition on the surface of the polarizing layer. The primer layer can be formed by a known coating method such as dipping or spin coating. It suffices to suitably set the coating conditions in a manner permitting the formation of a primer layer of desired film thickness. Prior to applying the coating, it is possible to subject the surface of the polarizing layer, which is the layer to be coated, to a chemical treatment with an acid, alkali, or any of various organic solvents or the like; a physical treatment with plasma, UV radiation, ozone or the like; or a detergent treatment with any of various detergents. The above drying can be conducted by placing the lens on which the waterborne resin composition has been coated in an atmosphere of from room temperature to 100°C for from 5 minutes to 24 hours, for example.

### Step of forming a coating

Next, after coating a curable composition on the primer layer that has been formed, a cured coating is formed by subjecting the coating to a curing treatment. The curable composition can be coated by a known coating method such as dipping or spin coating. The curing treatment can be conducted by heating or by irradiation with light, depending on the type of curable composition. As set forth above, the curing treatment that is implemented is thought to contribute to enhancing adhesion between the primer layer and polarizing layer by causing the polyether polyurethane resin in the primer layer to generate active groups. The type of cured coating that is formed can be determined based on the performance of the polarizing lens that is required. A desirable specific example is a hardcoat layer that can contribute to enhancing the scratching resistance of the polarizing lens. From the perspective of achieving both enhanced lens durability and optical characteristics, the thickness desirably falls within a range of 0.5 to 10 µm.

As one embodiment of the hardcoat layer, a coating can be formed in which a microparticulate metal oxide has been added to the organic silicon compound, as described above. The coating is generally cured by a heat treatment. The heat curing treatment can be conducted, for example, by placing the lens that has been coated with a coating liquid containing an organic silicon compound and a microparticulate metal oxide in an environment of an ambient temperature of 50 to 150°C for about 30 minutes to 2 hours.

From the perspective of workability, the hardcoat layer that is provided on the polarizing layer is advantageously formed from a photocurable compound. Thus, an example of a desirable hardcoat layer is one that comprises a main component in the form of a multifunctional acrylate compound. In the present invention, the term "acrylate" includes methacrylate. Below, the term "(meth)acrylate" encompasses both acrylate and methacrylate. Generally, an acrylic coating adheres poorly to the polarizing layer. In contrast, the above primer layer can be provided between the two films to enhance adhesion.

A multifunctional acrylate compound that can be used to form the hardcoat layer is a compound having at least two intramolecular acrylate polymerizable groups, desirably a compound having at least two intramolecular acryloyloxy or methacryloyloxy groups. Specific examples are ethylene glycol diacrylate, diethylene glycol diacrylate, 1,6-hexanediol diacrylate, neopentyl glycol diacrylate, trimethylol propane triacrylate, trimethylol ethane triacrylate, tetramethylol methane triacrylate, tetramethylol methane tetraacrylate, pentaglycerol triacrylate, pentaerythritol triacrylate, pentaerythritol tetraacrylate, glycerine triacrylate, dipentaerythritol triacrylate, dipentaerythritol tetraacrylate, dipentaerythritol pentaacrylate, dipentaerythritol hexaacrylate, tris(acryloyloxyethyl)isocyanurate, ethylene glycol dimethacrylate, diethylene glycol dimethacrylate, 1,6-hexanediol dimethacrylate, neopentyl glycol dimethacrylate, trimethylol propane trimethacrylate, trimethylol ethane trimethacrylate, tetramethylol methane trimethacrylate, tetramethylol methane tetramethacrylate, pentaglycerol trimethacrylate, pentaerythritol trimethacrylate, pentaerythritol tetramethacrylate, glycerine trimethacrylate, dipentaerythritol trimethacrylate, dipentaerythritol tetramethacrylate, dipentaerythritol pentamethacrylate, dipentaerythritol hexamethacrylate, tris(methacryloyloxymethyl)isocyanurate, phosphazene acrylate compounds and phosphazene methacrylate compounds in which an acryloyloxy group or methacryloyloxy group is incorporated onto the phosphazene ring of a phosphazene compound, urethane acrylate compounds and urethane methacrylate compounds obtained by reacting a polyisocyanate having at least two intramolecular isocyanate groups with a polyol compound having at least one acryloyloxy group or methacryloyloxy group and a hydroxyl group, polyester acrylate compounds obtained by reacting a halide having at least two intramolecular carboxylic acid groups with a polyol compound having at least one acryloyloxy group or methacryloyloxy group and a hydroxyl group, polyester methacrylates compounds, and oligomers such as dimers and trimers of the various above compounds.

The above compounds can be employed singly or in mixtures of two or more. In addition to the above multifunctional (meth)acrylates, at least one monofunctional (meth)acrylate selected from the group consisting of hydroxyethyl (meth)acrylates, 2-hydroxyethyl (meth)acrylates, 2-hydroxypropyl (meth)acrylates, hydroxybutyl (meth)acrylates, 2-hydroxy-3-phenoxypropyl (meth)acrylates, and glycidyl (meth)acrylates can be formulated in a proportion of desirably equal to or lower than 10.0 weight percent relative to the solid component of the hardcoat layer-use coating composition when cured.

A polymerizable oligomer can be added to the hardcoat layer for adjusting hardness. Examples of such oligomers are terminal (meth)acrylate polymethyl methacrylates, terminal styryl poly(meth)acrylates, terminal (meth)acrylate polystyrenes, terminal (meth)acrylate polyethylene glycols, terminal (meth)acrylate acrylonitrile-styrene copolymers, terminal (meth)acrylate styrene-methyl(meth)acrylate copolymers, and other macromonomers. The content is desirably 5.0 to 50.0 weight percent relative to the solid component of the coating composition when cured.

The above polymerizable component can be mixed with a solvent and employed in the form of a solution. A commercially available polymerizable component can also be employed. The coating composition for forming the hardcoat layer can contain known photopolymerization initiators. The type and quantity of the photopolymerization initiator employed are not specifically limited. Additional components in the form of inorganic oxide particles can be added for enhancing scratching resistance. The inorganic oxide particles are desirably dispersed in a solvent and mixed with the other components in the form of a colloidal solution, for example, to form a uniform coating. Examples of the inorganic oxide are silica, zirconia, alumina, and complex oxides such as alumina-magnesium and tin oxide-zirconia. The quantity added is normally about 5 to 80 weight percent relative to the solid component of the coating composition.

An acrylic hardcoat layer can be formed by coating the above hardcoat layer-forming coating composition on the primer layer, drying it as needed, and then irradiating it with light. The coating conditions can be suitably established so as to form a hardcoat layer of desired film thickness. The light that is irradiated can be, for example, an electron beam or ultraviolet radiation. The type of light irradiated and the irradiation conditions are suitably selected based on the type of hardcoat layer-forming components being employed. Generally, it is possible to form a high-strength hardcoat layer that contributes to enhancing the scratching resistance of the lens by irradiating ultraviolet radiation with an irradiation intensity of about 500 to 2,000 mJ/cm². The irradiation of light can also increase adhesion of the primer layer.

A polarizing lens sequentially having on a lens substrate a polarizing layer, a primer layer, and a cured coating can be obtained by the above-described steps. In the method of manufacturing a polarizing lens of an aspect of the present invention, functional films such as antireflective films, water-repellent films, UV-absorbing films, IR-absorbing films, photochromic films, and antistatic films can be laminated by known methods on the above-described cured coating.

### EXAMPLES

The present invention will be described in detail below based on Examples. However, the present invention is not limited to the examples. The room temperature referred to below is 25°C ± 5°C.

### [Example 1]

### Fabrication of a polarizing lens

### (1) Forming the orientation layer

A Phoenix lens (made by Hoya Corp., refractive index 1.53, with hardcoat, 70 mm in diameter, base curve 4, center thickness 1.5 mm) was employed as the lens substrate. An SiO₂ film 0.2 µm in thickness was formed by vacuum vapor deposition on the concave surface of the lens.
Abrasive-containing urethane foam (abrasive: Polipla203A, product made by Fujimi Inc., Al₂O₃ particles with an average particle diameter 0.8 µm; urethane foam: roughly identical in shape to the curvature of the concave surface of the above lens) was employed to apply a monoaxial polishing treatment for 30 seconds under conditions of a rotational speed of 350 rpm and a polishing force of 50 g/cm² to the SiO₂ film that had been formed. The polished lens was rinsed in pure water and dried.

### (2) Forming the polarizing layer

After drying the lens, 2 to 3 g of an aqueous solution comprising about 5 weight percent of water-soluble dichroic dye (Varilight Solution 2S, a product made by Sterling Optics, Inc.) was spin coated onto the polished surface to form a polarizing layer. The spin coating was conducted by feeding the aqueous solution of dye at a rotational speed of 300 rpm maintained for 8 seconds, followed by a rotational speed of 400 rpm maintained for 45 seconds, and 1,000 rpm maintained for 12 seconds.
Next, an aqueous solution was prepared with an iron chloride concentration of 0.15 M, a calcium hydroxide concentration of 0.2 M, and a pH of 3.5. The lens obtained as set forth above was immersed for about 30 seconds in this aqueous solution and then withdrawn and thoroughly rinsed with pure water. This process rendered the previously water-soluble dye sparingly soluble (water insolubilization treatment).

### (3) Amino silane treatment

Following (2) above, the lens was immersed for 15 minutes in a 10 weight percent aqueous solution of γ-aminopropyltriethoxysilane, rinsed three times in pure water, heat treated for 30 minutes in a heating furnace (temperature within furnace 85°C), removed from the furnace, and then cooled to room temperature.

### (4) Epoxy silane treatment

Following the above cooling, the lens was immersed for 30 minutes in a 2 weight percent aqueous solution of γ-glycidoxypropyltrimethoxysilane, heat treated for 30 minutes in a heating furnace (temperature within furnace 60°C), removed from the furnace, and cooled to room temperature.
Following the above processing, the thickness of the polarizing layer that had been formed was about I µm.

### (5) Forming the primer layer

A waterborne polyurethane resin composition was spin coated on the surface of the polarizing film following the above cooling treatment. Adeka Bontiter HUX-350, a product made by Adeka K.K. (resin component: polyether polyurethane resin) that had been diluted six-fold with propylene glycol monomethyl ether (PGM) and to which a leveling agent (FZ-2105, a product made by Dow Corning Toray Co., Ltd.) was added, was employed as the waterborne polyurethane resin composition. The spin coating was conducted by feeding the above composition onto the polarizing layer at a rotational speed of 100 rpm maintained for 10 seconds, followed by a rotational speed of 400 rpm maintained for 10 seconds and a rotational speed of 1,000 rpm maintained for 30 seconds.
Following the spin coating, the lens was dried with blowing at room temperature to form a primer layer on the polarizing layer. The primer layer that was formed was 0.30 µm in thickness.

### (6) Forming the hardcoat layer

The lens that had been subjected to the processing of (5) above was coated by spin coating (1,000 rpm maintained for 30 seconds) with a coating liquid in the form of a mixture of 1,000 weight parts of dipentaerythritol hexaacrylate (Kayarad DPHA, made by Nippon Kayaku Co., Ltd.), 2,500 weight parts of ethyl acetate, and 30 weight parts of photopolymerization initiator (Irgacure 819, made by Ciba Japan). Following the coating, curing was conducted at a UV irradiation intensity of 1,200 mJ/cm² with a UV irradiation device to obtain a hardcoat layer with a thickness of 6 µm.
A total of two polarizing lenses having on a lens substrate an orientation layer, a polarizing layer, a primer layer, and a hardcoat layer were prepared by the above process.

### [Example 2]

Polarizing lenses were obtained by the same method as in Example 1 with the exception that Adeka Bontiter HUX-550, a product made by Adeka Corp. (resin component: polyether polyurethane resin) that had been diluted six-fold with propylene glycol monomethyl ether (PGM), was employed as the waterborne polyurethane resin composition.

### [Example 3]

Polarizing lenses were obtained by the same method as in Example 1 with the exception that no epoxy silane treatment was conducted.

### [Example 4]

Polarizing lenses were obtained by the same method as in Example 1 with the exceptions that no heat treatment was conducted during the amino silane treatment and no epoxy silane treatment was conducted.

### [Example 5]

Polarizing lenses were obtained by the same method as in Example I with the exception that no heat treatment was conducted in the epoxy silane treatment.

### [Example 6]

Polarizing lenses were obtained by the same method as in Example I with the exception that the hardcoat layer was formed by the following method.
A coating liquid comprised of 500 weight parts of dipentaerythritol hexaacrylate (Kayarad DPHA, made by Nippon Kayaku Co., Ltd.), 1,000 weight parts of colloidal silica dispersed in methyl ethyl ketone (solid component: 30 percent), 3,000 weight parts of ethyl acetate, and 30 weight parts of photopolymerization initiator (Irgacure 819 made by Ciba Japan) that had been mixed in a vessel made of glass equipped with a magnetic stirrer was spin coated (at 1,000 rpm maintained for 30 seconds). Following the coating, curing was conducted at a UV irradiation intensity of 1,800 mJ/cm² with a UV irradiating device to obtain a hardcoat 1.5 µm in thickness.

### [Example 7]

Polarizing lenses were obtained by the same method as in Example I with the exceptions that the heat treatment in the amino silane treatment and the heat treatment in the epoxy silane treatment were both replaced by natural drying at room temperature and the hardcoat layer was formed by the following method.
Seventeen weight parts of γ-glycidoxypropyl trimethoxysilane, 30 weight parts of methanol, and 28 weight parts of colloidal silica dispersed in water (solid component: 40 weight percent, average particle diameter 15 nm) were charged to a vessel made of glass equipped with a magnetic stirrer and thoroughly mixed. Stirring was conducted for 24 hours at 5°C. Next, 15 weight parts of propylene glycol monomethyl ether, 0.05 weight part of silicone surfactant, and 1.5 weight parts of curing agent in the form of aluminum acetyl acetonate were added, and the mixture was thoroughly stirred and filtered to prepare a hard coating liquid (hardcoat composition). The pH of the coating liquid was 5.5.
The hard coating composition that had been prepared was coated by dipping (withdrawal rate of 20 cm/minute) on the surface of the primer layer. Subsequently, curing was conducted by heating for 90 minutes in a heating furnace at temperature within the furnace of 100°C to form a hardcoat layer 3 µm in thickness.

### [Comparative Example 1]

Polarizing lenses were obtained by the same method as in Example I with the exception that Adeka Bontiter HUX-210, a product made by Adeka Corp. (resin component: polyester polyurethane resin) that had been diluted 12-fold with propylene glycol monomethyl ether (PGM), was employed as the waterborne polyurethane resin composition.

### [Comparative Example 2]

Polarizing lenses were obtained by the same method as in Example 1 with the exception that Adeka Bontiter HUX-320, a product made by Adeka Corp. (resin component: polyether polyester polyurethane resin) that had been diluted six-fold with propylene glycol monomethyl ether (PGM), was employed as the waterborne polyurethane resin composition.

### [Comparative Example 3]

Polarizing lenses were obtained by the same method as in Example 1 with the exception that Adeka Bontiter HUX-386, a product made by Adeka Corp. (resin component: polycarbonate polyurethane resin) that had been diluted six-fold with propylene glycol monomethyl ether (PGM), was employed as the waterborne polyurethane resin composition.

### [Comparative Example 4]

Polarizing lenses were obtained by the same method as in Example 1 with the exception that Adeka Bontiter HUX-541, a product made by Adeka Corp. (resin component: polyester polyurethane resin) that had been diluted six-fold with propylene glycol monomethyl ether (PGM), was employed as the waterborne polyurethane resin composition.

### [Comparative Example 5]

Polarizing lenses were obtained by the same method as in Example 1 with the exception that Adeka Bontiter HUX-232, a product made by Adeka Corp. (resin component: polyester polyurethane resin) that had been diluted six-fold with propylene glycol monomethyl ether (PGM), was employed as the waterborne polyurethane resin composition.

### [Comparative Example 6]

Polarizing lenses were obtained by the same method as in Example 1 with the exception that no amino silane treatment was conducted.

### [Comparative Example 7]

Polarizing lenses were obtained by the same method as in Example 1 with the exception that no amino silane treatment and no epoxy silane heat treatment were conducted.

### Evaluation method

### 1. Evaluation of adhesion of hardcoat layer and polarizing layer

Crosscuts were made at intervals of 1 to 2 mm in the hardcoat layer to form 100 squares. Adhesive tape (cellophane tape made by Nichiban K.K.) was forcefully applied to the area where the crosscuts had been made, the adhesive tape was rapidly removed, and the number of the 100 squares that remained in the cured film without peeling off was counted.

### 2. Evaluation of external appearance

A separate lens from the lens used for the evaluation of 1, above was observed visually under a florescent lamp and the presence or absence of clouding and cracking was evaluated.

The results of the above are given in Table 1.

**[Table 1]**

| | Primer layer containing polyether polyurethane resin present | Amino silane treatment | | Epoxy silane treatment | | Evaluation of adhesion (number of squares remaining) | Clouding | Cracking |
|---|---|---|---|---|---|---|---|---|
| | | Coupling agent coating conducted | Heat treatment conducted | Coupling agent coating conducted | Heat treatment conducted | | | |
| Example 1 | Present | Conducted | Conducted | Conducted | Conducted | 100 | Absent | Absent |
| Example 2 | Present | Conducted | Conducted | Conducted | Conducted | 100 | Absent | Absent |
| Example 3 | Present | Conducted | Conducted | X | X | 99 | Present | Present |
| Example 4 | Present | Conducted | X | X | X | 99 | Present | Present |
| Example 5 | Present | Conducted | Conducted | Conducted | X | 100 | Absent | Absent |
| Comparative Example 1 | X | Conducted | Conducted | Conducted | Conducted | 0 | Absent | Absent |
| Example 6 | Present | Conducted | Conducted | Conducted | Conducted | 100 | Absent | Absent |
| Example 7 | Present | Conducted | X | Conducted | X | 100 | Absent | Absent |
| Comparative Example 2 | X | Conducted | Conducted | Conducted | Conducted | 5 | Absent | Absent |
| Comparative Example 3 | X | Conducted | Conducted | Conducted | Conducted | 0 | Absent | Absent |
| Comparative Example 4 | X | Conducted | Conducted | Conducted | Conducted | 0 | Absent | Absent |
| Comparative Example 5 | X | Conducted | Conducted | Conducted | Conducted | 30 | Absent | Absent |
| Comparative Example 6 | Present | X | X | Conducted | Conducted | 0 | Present | Present |
| Comparative Example 7 | Present | X | X | Conducted | X | 0 | Present | Present |

As shown in Table 1, in Examples 1 to 7, in which a primer layer containing polyether polyurethane resin was formed on a polarizing layer treated with amino silane, there was extremely little or no film separation, and enhanced adhesion was achieved by means of the primer layer. In Examples 3 and 4, in which no epoxy silane treatment was conducted, clouding and cracking were observed. Thus, observation of the cross sections of these lenses revealed that the clouding and cracking had occurred in the polarizing layer. The fact that the film strength of the polarizing layer was enhanced by an epoxy silane treatment was thought to be why no clouding or cracking occurred in Examples 1, 2, 5, 6, and 7, in which an epoxy silane treatment was conducted.
In contrast, the reason why film separation occurred in Comparative Examples 1 to 5 was presumed to be that polyether polyurethane resin was not used to form the primer layer. Further, in Comparative Examples 6 and 7, in which no amino silane treatment was conducted, a visual inspection revealed that separation had occurred in the polarizing layer. Thus, the amino silane treatment was found to strengthen adhesion between the polarizing layer and the orientation layer beneath it. Observation of cross sections of the lenses of Comparative Examples 6 and 7 revealed that clouding and cracking had occurred in the polarizing layer. Based on these results, the amino silane treatment was found to contribute to enhancing the film strength of the polarizing layer.
The above results demonstrate that an aspect of the present invention can provide a polarizing lens of good durability with strong adhesion between the polarizing layer and the hardcoat layer, and a high-quality polarizing lens free of clouding and cracking.

The present invention is useful in the field of manufacturing eyeglass lenses.

## Claims

1. A method of manufacturing a polarizing lens, which comprises:
forming a polarizing layer by orienting and depositing a dichroic dye on a lens substrate;
conducting an amino silane treatment by impregnating the polarizing layer with a solution of a silane coupling agent comprising an amino group;
coating a waterborne resin composition comprising a polyether polyurethane resin and a water-based solvent on the polarizing layer following the amino silane treatment and then drying the waterborne resin composition to form a primer layer; and
forming a cured coating by coating a curable composition on the primer layer that has been formed and then conducting a curing treatment.

2. The method of manufacturing a polarizing lens according to claim 1, which comprises conducting the curing treatment by irradiating light or by heating.

3. The method of manufacturing a polarizing lens according to claim 1 or 2, which comprises, in the amino silane treatment, drying or heat treatment following the impregnation with a solution of a silane coupling agent comprising an amino group.

4. The method of manufacturing a polarizing lens according to any of claims 1 to 3, which further comprises conducting an epoxy silane treatment by impregnating the polarizing layer with a silane coupling agent comprising an epoxy group prior to the formation of a primer layer but after the amino silane treatment.

5. The method of manufacturing a polarizing lens according to claim 4, which comprises, in the epoxy silane treatment, drying or heating treatment following the impregnation with a solution of a silane coupling agent comprising an epoxy group.
